# EUROPEAN PATENT APPLICATION

(11) **EP 4 610 293 A1**
(43) Date of publication of application: **03.09.2025**
(21) Application number: 23882515.2
(22) Date of filing: 18.10.2023
(51) Int. Cl.: C08G 64/10, C08K 3/28, C08K 3/32, C08K 5/109, C08L 69/00, C09D 169/00, H01B 1/06, H01M 10/0565

(54) **POLYCARBONATE RESIN AND RESIN COMPOSITION CONTAINING SAME**

(30) Priority: 25.10.2022 JP 2022170327
(71) Applicant: MITSUBISHI GAS CHEMICAL COMPANY, INC., Chiyoda-ku Tokyo 100-8324 (JP)
(72) Inventor: HORIUCHI Shoki, Kamisu-shi, Ibaraki 314-0102 (JP); OGAWA Noriyoshi, Kamisu-shi, Ibaraki 314-0102 (JP); GOTO Toshihito, Kamisu-shi, Ibaraki 314-0102 (JP)
(74) Representative: Hoffmann Eitle
(86) International application number: PCT/JP2023/037727
(87) International publication number: WO 2024/090310

(57) **Abstract**

According to the present invention, it is possible to provide a polycarbonate resin that contains a constituent unit (A) derived from a monomer represented by general formula (1), a constituent unit (B) derived from a monomer represented by general formula (2) and a constituent unit (C) derived from a monomer represented by general formula (3). Relative to the total amount of constituent units (A), (B) and (C) that constitute the polycarbonate resin, the proportion of constituent unit (A) is 20-50 mol%, the proportion of constituent unit (B) is 5-20 mol%, and the proportion of constituent unit (C) is 30-75 mol%.

## Description

### TECHNICAL FIELD

The present invention relates to a polycarbonate resin that is easily dissolved in a carbonate-based organic solvent such as propylene carbonate, and a resin composition that contains the resin and has a viscosity suitable for forming a coating film and a high transmittance.

### BACKGROUND ART

The intended use of a specific polycarbonate resin, in which the polycarbonate resin is dissolved in an organic solvent and is used as an ink, a painting material or the like, is known, and various organic solvents are used therefor. In recent years, a shift from halogen-based organic solvents, toluene, 1,4-dioxane and the like that have human safety concerns, to safer solvents, has been promoted (Patent Document 1).

Meanwhile, carbonate-based solvents such as dimethyl carbonate and ethylene carbonate have relatively high safety and have been widely used particularly as electrolyte solvents for lithium ion batteries. However, in order to use such a carbonate-based solvent as a polycarbonate electrolyte, there has been a room for improvement, since the solubility of a polycarbonate resin in a carbonate-based solvent is low and it is difficult to obtain a coating film. In order to solve such a problem, various studies have been conducted, and for example, it has been proposed that methylene chloride is added as a solvent and the material is used as a colloidal solution for coating (Patent Document 2). However, since methylene chloride is a halogen-based solvent having a large environmental impact, there have been human safety concerns.

Further, the solution viscosity of a resin composition (resin solution) obtained by dissolving a polycarbonate resin in a carbonate-based solvent is required to be moderate for forming a coating film. For example, when forming a coating film, if the solution viscosity is low, there is a limitation on the surface to be coated that can be used, for example, it is required that the surface to be coated is not inclined. Moreover, advanced coating technologies are required, for example, there is a need to control the flow of the resin solution at the time of coating. On the other hand, if the solution viscosity is high, the flow of the resin solution becomes poor, resulting in difficulty in forming a precise coating film.

The polycarbonate resin described in Patent Document 3 dissolves in carbonate-based organic solvents such as dimethyl carbonate and diethyl carbonate, but is difficult to dissolve in carbonate-based organic solvents such as propylene carbonate, and even if it is dissolved in propylene carbonate, there is a room for improvement since the solution viscosity is too high.

Further, it is preferred that a resin solution has a high transmittance since the formed state can be easily checked at the time of forming a coating film. Furthermore, it is practically desirable that a resin solution has good storage stability, i.e., maintains a high transmittance after the preparation of the solution.

### PRIOR ART DOCUMENTS

### PATENT DOCUMENTS

Patent Document 1: WO2018/123282
Patent Document 2: Japanese Laid-Open Patent Publication No. 2000-357533
Patent Document 3: WO2022/181460

### SUMMARY OF THE INVENTION

### PROBLEMS TO BE SOLVED BY THE INVENTION

The present invention addresses the problem of providing a polycarbonate resin that is easily dissolved in a carbonate-based organic solvent such as propylene carbonate, and a resin composition that contains the resin and has a viscosity suitable for forming a coating film and a high transmittance.

### MEANS FOR SOLVING THE PROBLEMS

The present inventors diligently made researches in order to solve the above-described problems and found that a polycarbonate resin having specific structural units has excellent solubility in a carbonate-based organic solvent such as propylene carbonate, and thus the present invention was achieved.

Specifically, the present invention is as follows:
<1> A polycarbonate resin that comprises a structural unit (A) derived from a monomer represented by general formula (1), a structural unit (B) derived from a monomer represented by general formula (2), and a structural unit (C) derived from a monomer represented by general formula (3),
   wherein relative to the total amount of the structural units (A), (B) and (C) that constitute the polycarbonate resin, the ratio of the structural unit (A) is 20 to 50 mol%, the ratio of the structural unit (B) is 5 to 20 mol%, and the ratio of the structural unit (C) is 30 to 75 mol%: 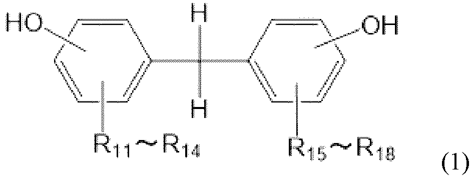 wherein in general formula (1),
   R₁₁ to R₁₄ and R₁₅ to R₁₈ each independently represent hydrogen, fluorine, chlorine, bromine, or iodine, or an alkyl group having 1 to 20 carbon atoms, an aryl group having 6 to 12 carbon atoms, an alkenyl group having 2 to 12 carbon atoms, an alkoxy group having 1 to 5 carbon atoms, or an aralkyl group having 7 to 17 carbon atoms, each of which may have a substituent, 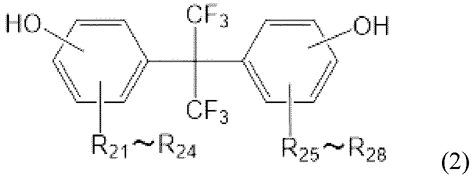 wherein in general formula (2),
   R₂₁ to R₂₄ and R₂₅ to R₂₈ each independently represent hydrogen, fluorine, chlorine, bromine, or iodine, or an alkyl group having 1 to 20 carbon atoms, an aryl group having 6 to 12 carbon atoms, an alkenyl group having 2 to 12 carbon atoms, an alkoxy group having 1 to 5 carbon atoms, or an aralkyl group having 7 to 17 carbon atoms, each of which may have a substituent, 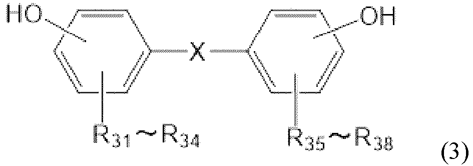 wherein in general formula (3),
   R₃₁ to R₃₄ and R₃₅ to R₃₈ each independently represent hydrogen, fluorine, chlorine, bromine, or iodine, or an alkyl group having 1 to 20 carbon atoms, an aryl group having 6 to 12 carbon atoms, an alkenyl group having 2 to 12 carbon atoms, an alkoxy group having 1 to 5 carbon atoms, or an aralkyl group having 7 to 17 carbon atoms, each of which may have a substituent; and
   Xis 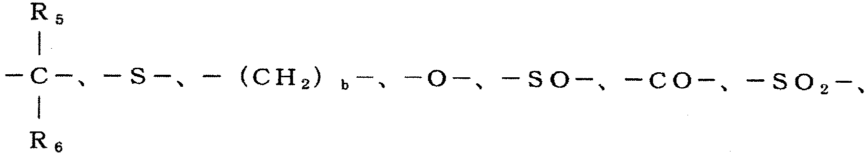 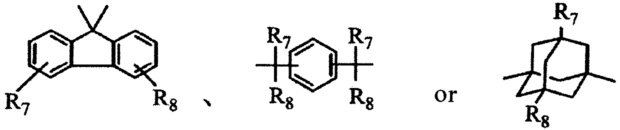 wherein in formulae,
      R₅ and R₆ each independently represent hydrogen, fluorine, chlorine, bromine, or iodine, or an alkyl group having 1 to 20 carbon atoms, an alkoxy group having 1 to 5 carbon atoms, or an aryl group having 6 to 12 carbon atoms, each of which may have a substituent, or represent a group in which R₅ and R₆ bind to each other to form a carbocyclic ring having 5 to 20 carbon atoms or a heterocyclic ring having 5 to 12 elements, with the proviso that R₅ and R₆ are not both hydrogen or a trifluoromethyl group; and
      R₇ and R₅ each independently represent hydrogen, fluorine, chlorine, bromine, or iodine, or an alkyl group having 1 to 9 carbon atoms, an alkoxy group having 1 to 5 carbon atoms, an alkenyl group having 2 to 12 carbon atoms, or an aryl group having 6 to 12 carbon atoms, each of which may have a substituent.
<2> The polycarbonate resin according to item <1>, wherein relative to the total amount of the structural units (A), (B) and (C) that constitute the polycarbonate resin, the ratio of the structural unit (A) is 20 to 30 mol%, the ratio of the structural unit (B) is 10 to 15 mol%, and the ratio of the structural unit (C) is 61 to 70 mol%.
<3> The polycarbonate resin according to item <1> or <2>, wherein the monomer represented by general formula (1) is a mixture of formula (1-1), formula (1-2) and formula (1-3); the monomer represented by general formula (2) is 2,2-bis(4-hydroxyphenyl)hexafluoropropane (BPAF); and the monomer represented by general formula (3) is 2,2-bis(4-hydroxyphenyl)propane (BPA): 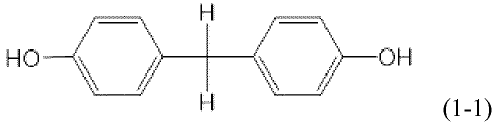 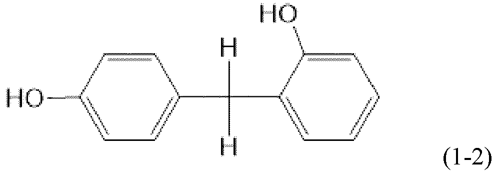 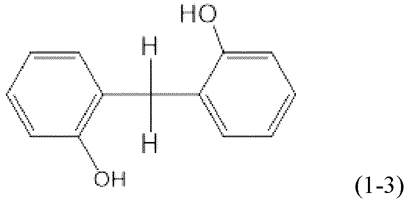 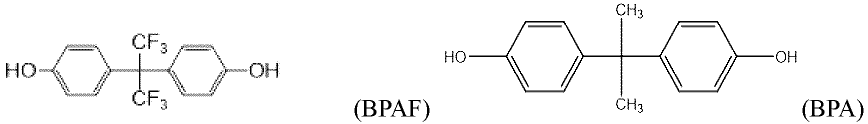
<4> A resin composition comprising the polycarbonate resin according to any one of items <1> to <3> and a carbonate-based organic solvent, wherein
   the content of the polycarbonate resin in the resin composition is 0.05 to 50% by mass; and
   the content of the carbonate-based organic solvent in the resin composition is 50 to 99.5% by mass.
<5> The resin composition according to item <4>, wherein the carbonate-based organic solvent comprises propylene carbonate.
<6> The resin composition according to item <5>, wherein when
   the content of the polycarbonate resin in the resin composition is 10% by mass and
   the content of the propylene carbonate in the resin composition is 90% by mass,
   the transmittance of the resin composition at 440 nm is 90% or more.
<7> The resin composition according to item <5> or <6>, wherein when
   the content of the polycarbonate resin in the resin composition is 10% by mass and
   the content of the propylene carbonate in the resin composition is 90% by mass,
   the viscosity of the resin composition is 80 to 170 mPa·S.
<8> A coating film obtained by drying the resin composition according to any one of items <4> to <7>.
<9> An electrolytic solution in which 0.1 to 30% by mass of a lithium salt is dissolved in the resin composition according to any one of items <4> to <7>.
<10> The electrolytic solution according to item <9>, wherein the lithium salt comprises at least one of LiPF₆ and C₂F₆LiNO₄.
<11> A polymer gel electrolyte obtained by gelling the electrolytic solution according to item <9> or <10>.
<12> The polymer gel electrolyte according to item <11>, which has a conductivity of 1 to 30,000 µS/cm.

### ADVANTAGEOUS EFFECT OF THE INVENTION

According to the present invention, it is possible to provide a polycarbonate resin that is easily dissolved in a carbonate-based organic solvent such as propylene carbonate, and a resin composition that contains the resin and has a viscosity suitable for forming a coating film and a high transmittance.

### EMBODIMENTS FOR CARRYING OUT THE INVENTION

Hereinafter, the present invention will be described in detail by way of embodiments, examples, etc., but the present invention is not limited to embodiments, examples, etc. described below and can be arbitrarily changed and then practiced within a range not departing from the gist of the present invention.

### [Polycarbonate Resin]

The polycarbonate resin of the present invention contains a structural unit (A) derived from a monomer represented by general formula (1), a structural unit (B) derived from a monomer represented by general formula (2), and a structural unit (C) derived from a monomer represented by general formula (3).

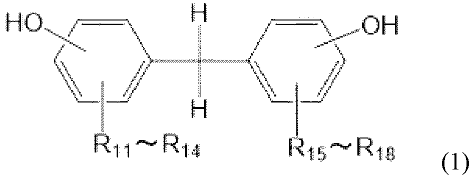

In general formula (1),
R₁₁ to R₁₄ and R₁₅ to R₁₈ each independently represent hydrogen, fluorine, chlorine, bromine, or iodine, or an alkyl group having 1 to 20 carbon atoms, an aryl group having 6 to 12 carbon atoms, an alkenyl group having 2 to 12 carbon atoms, an alkoxy group having 1 to 5 carbon atoms, or an aralkyl group having 7 to 17 carbon atoms, each of which may have a substituent, preferably represent hydrogen, a methyl group, or an allyl group, and more preferably represent hydrogen.

In this specification, when describing "may have a substituent", examples of the "substituent" include "a fluorine atom, a chlorine atom, a bromine atom, an iodine atom, an alkyl group having 1 to 7 carbon atoms, an aryl group having 6 to 12 carbon atoms, an alkenyl group having 2 to 7 carbon atoms, an alkoxy group having 1 to 5 carbon atoms, and an aralkyl group having 7 to 17 carbon atoms" (the same applies below).

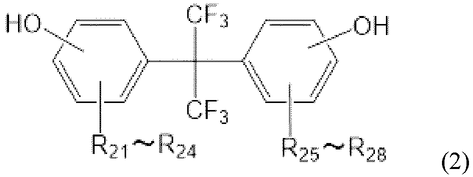

In general formula (2),
R₂₁ to R₂₄ and R₂₅ to R₂₈ each independently represent hydrogen, fluorine, chlorine, bromine, or iodine, or an alkyl group having 1 to 20 carbon atoms, an aryl group having 6 to 12 carbon atoms, an alkenyl group having 2 to 12 carbon atoms, an alkoxy group having 1 to 5 carbon atoms, or an aralkyl group having 7 to 17 carbon atoms, each of which may have a substituent, preferably represent hydrogen, a methyl group, or an allyl group, and more preferably represent hydrogen.

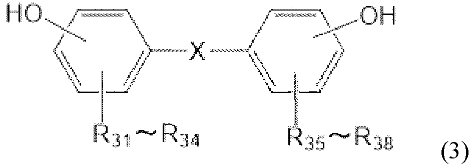

In general formula (3),
R₃₁ to R₃₄ and R₃₅ to R₃₈ each independently represent hydrogen, fluorine, chlorine, bromine, or iodine, or an alkyl group having 1 to 20 carbon atoms, an aryl group having 6 to 12 carbon atoms, an alkenyl group having 2 to 12 carbon atoms, an alkoxy group having 1 to 5 carbon atoms, or an aralkyl group having 7 to 17 carbon atoms, each of which may have a substituent, preferably represent hydrogen, a methyl group, or an allyl group, and more preferably represent hydrogen.
X is

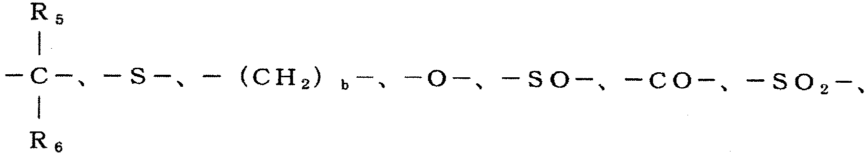

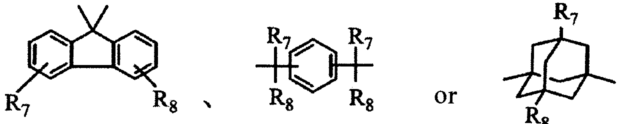

In this regard, R₅ and R₆ each independently represent hydrogen, fluorine, chlorine, bromine, or iodine, or an alkyl group having 1 to 20 carbon atoms, an alkoxy group having 1 to 5 carbon atoms, or an aryl group having 6 to 12 carbon atoms, each of which may have a substituent, or represent a group in which R₅ and R₆ bind to each other to form a carbocyclic ring having 5 to 20 carbon atoms or a heterocyclic ring having 5 to 12 elements, with the proviso that R₅ and R₆ are not both hydrogen or a trifluoromethyl group; and
R₇ and R₅ each independently represent hydrogen, fluorine, chlorine, bromine, or iodine, or an alkyl group having 1 to 9 carbon atoms, an alkoxy group having 1 to 5 carbon atoms, an alkenyl group having 2 to 12 carbon atoms, or an aryl group having 6 to 12 carbon atoms, each of which may have a substituent.

X preferably represents -C(CH₃)₂-, -O-, or a cyclohexylidene group, and more preferably represents -C(CH₃)₂-.

In the polycarbonate resin of the present invention, relative to the total amount of the structural units (A), (B) and (C) that constitute the polycarbonate resin, the ratio of the structural unit (A) is 20 to 50 mol%, preferably 20 to 40 mol%, and more preferably 20 to 30 mol%, the ratio of the structural unit (B) is 5 to 20 mol%, preferably 8 to 20 mol%, more preferably 8 to 16 mol%, and particularly preferably 10 to 15 mol%, and the ratio of the structural unit (C) is 30 to 75 mol%, preferably 40 to 72 mol%, more preferably 44 to 72 mol%, even more preferably 54 to 72 mol%, and particularly preferably 61 to 70 mol%.

The polycarbonate resin of the present invention may contain a structural unit other than the structural units (A), (B) and (C) within a range in which the effects of the present invention are not reduced.

In one embodiment of the present invention, the monomer represented by general formula (1) is preferably a mixture of formula (1-1), formula (1-2) and formula (1-3) below. The mixing ratio thereof is not particularly limited, but formula (1-1): formula (1-2): formula (1-3) is preferably 27 to 33: 48 to 52: 17 to 20 (% by mass), more preferably 29 to 33: 48 to 51: 17 to 20 (% by mass), and particularly preferably 31 to 33: 48 to 50: 17.5 to 19.5 (% by mass).

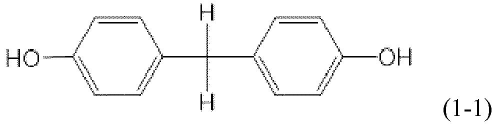

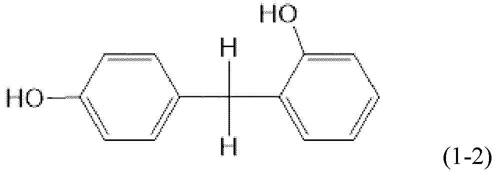

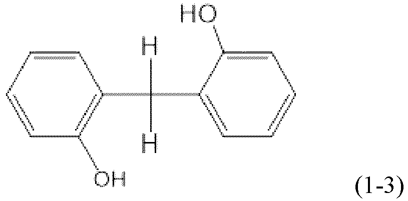

In one embodiment of the present invention, the monomer represented by general formula (1) preferably has a purity of 99.0% by mass or more, and more preferably has a purity of 99.3% by mass or more, as determined by quantitative analysis in accordance with JIS K 0124.

Further, in the monomer represented by general formula (1), the content of a phenol as an impurity is preferably 0.1% by mass or less as determined by quantitative analysis in accordance with JIS K 0124.

Furthermore, in the monomer represented by general formula (1), the content of a compound represented by formula below as an impurity is preferably 0.6% by mass or less as determined by quantitative analysis in accordance with JIS K 0124. 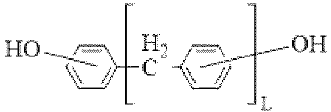 L=2 to 6

In one embodiment of the present invention, the monomer represented by general formula (1) preferably has an ash content of 0.1% by mass or less as determined by an ash content test in accordance with JIS K 4101-10.

Further, the monomer represented by general formula (1) preferably has a melting point of 115 to 121°C as measured in accordance with JIS K 0064.

When the monomer represented by general formula (1) has such a purity, impurity content and ash content, the heat resistance and color phase of a polycarbonate resin or coating film obtained can be improved.

In one embodiment of the present invention, the monomer represented by general formula (2) is preferably 2,2-bis(4-hydroxyphenyl)hexafluoropropane (BPAF), 2,2-bis(4-hydroxy-3-methylphenyl)hexafluoropropane, or 2,2-bis(4-hydroxy-3-allylphenyl)hexafluoropropane, and more preferably 2,2-bis(4-hydroxyphenyl)hexafluoropropane (BPAF) represented by the following structural formula:

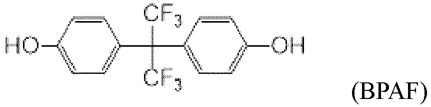

In one embodiment of the present invention, the monomer represented by general formula (3) is preferably 2,2-bis(4-hydroxyphenyl)propane (BPA), 2,2-bis(4-hydroxyphenyl)cyclohexane (BPZ), or bis(4-hydroxyphenyl)ether (DHDE), and more preferably 2,2-bis(4-hydroxyphenyl)propane (BPA) represented by the following structural formula:

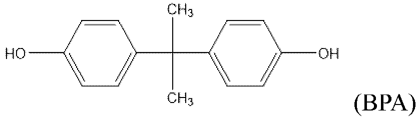

In one embodiment of the present invention, all the structural units represented by the following formulae are preferably contained:

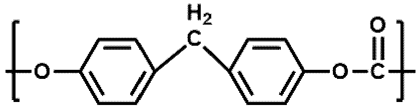

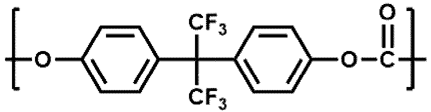

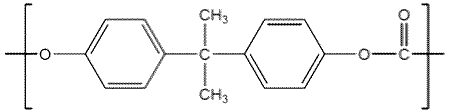

The polycarbonate resin of the present invention can be produced by reacting the monomer represented by general formula (1), the monomer represented by general formula (2), and the monomer represented by general formula (3) with a carbonate ester-forming compound. Accordingly, the polycarbonate resin can be produced by a publicly-known method used for producing a polycarbonate resin derived from bisphenol A, for example, a direct reaction between bisphenol and phosgene (phosgene method) or a transesterification reaction between bisphenol and bisaryl carbonate (transesterification method).

In the phosgene method, usually, the monomer represented by general formula (1), the monomer represented by general formula (2), and the monomer represented by general formula (3) are reacted with phosgene in the presence of an acid binding agent and a solvent. As the acid binding agent, for example, pyridine, a hydroxide of an alkali metal such as sodium hydroxide and potassium hydroxide or the like is used. As the solvent, for example, methylene chloride, chloroform or the like is used. Further, for promoting a polycondensation reaction, a catalyst such as a tertiary amine including triethylamine, a quaternary ammonium salt including benzyltriethylammonium chloride or the like is preferably added. Moreover, for adjusting the polymerization degree, a monofunctional compound such as phenol, p-t-butylphenol, p-cumylphenol, p-hydroxyphenethyl alcohol, 2-[2-hydroxy-5-[2-(methacryloyloxy)ethyl]phenyl]-2H-benzotriazole, and long chain alkyl substituted phenol is preferably added as a molecular weight control agent. Furthermore, if desired, an antioxidant such as sodium sulfite and hydrosulfite and a branching agent such as phloroglucin and isatin bisphenol may be added in a small amount. The reaction temperature is usually 0 to 150°C, and preferably 5 to 40°C. The reaction time varies depending on the reaction temperature, but is usually 0.5 min to 10 hours, and preferably 1 min to 2 hours. Further, during the reaction, pH of the reaction system is desirably maintained at 10 or higher.

Meanwhile, in the transesterification method, the monomer represented by general formula (1), the monomer represented by general formula (2), and the monomer represented by general formula (3) are mixed with bisaryl carbonate and reacted at a high temperature under reduced pressure. Examples of the bisaryl carbonate include diphenyl carbonate, di-p-tolyl carbonate, phenyl-p-tolyl carbonate, di-p-chlorophenyl carbonate, and dinaphthyl carbonate. Two or more of these compounds may be used in combination. The reaction is performed usually at 150 to 350°C, and preferably at 200 to 300°C. Further, the pressure reducing degree is preferably adjusted to 1 mmHg or lower finally, and phenols derived from the bisaryl carbonate produced by means of the transesterification reaction are distilled away to the outside of the system. The reaction time varies depending on the reaction temperature, the pressure reducing degree, etc., but is usually about 1 to 24 hours. The reaction is preferably performed under an atmosphere of an inert gas such as nitrogen and argon. Further, if desired, the reaction may be performed with a molecular weight control agent, an antioxidant and a branching agent being added.

The polycarbonate resin of the present invention preferably keeps solvent solubility, coatability, peelability, scratch resistance, impact resistance, etc. that are required for a coating film-forming resin in good balance. By setting the lower limit of the limiting viscosity of the resin to a predetermined value or higher, scratch resistance and impact resistance strength are improved, and by setting the upper limit of the limiting viscosity to a predetermined value or lower, reduction in solvent solubility and increase in solution viscosity are suppressed, and coatability is maintained. The limiting viscosity of the polycarbonate resin is preferably 0.3 to 2.0 dl/g, and more preferably 0.35 to 1.5 dl/g.

### [Resin Composition]

The resin composition of the present invention contains the polycarbonate resin described above and a carbonate-based organic solvent.

The blending amount of the polycarbonate resin in the resin composition of the present invention is 0.05 to 50% by mass. In the case of coating applications, the blending amount is preferably set to 1 to 30% by mass, and more preferably set to 1 to 20% by mass depending on the limiting viscosity and solvent solubility. When the blending amount of the polycarbonate resin is within the above-described range, a good balance between solvent solubility and coatability is achieved, and workability and outer appearance are improved.

### <Carbonate-based Organic Solvent>

The resin composition of the present invention is a solution in which the above-described polycarbonate resin is dissolved in a carbonate-based organic solvent, and in this state, it is equivalent to paints that are generally called clear color. The resin composition of the present invention may be made into a colored paint composition by further dissolving or dispersing a desired dye and/or pigment therein.

For the resin composition of the present invention, at least the carbonate-based organic solvent is used as a solvent. In the carbonate-based organic solvent, propylene carbonate is preferably contained. Propylene carbonate is an ester of propylene glycol and carbonic acid, and the molecular formula thereof is C₄H₆O₃ and the molar mass thereof is 102.09 g/mol. The content of propylene carbonate in the carbonate-based organic solvent is preferably 30% by mass or more, more preferably 50% by mass or more, and particularly preferably 100% by mass.

In one embodiment of the present invention, another carbonate-based organic solvent may be contained within a range in which the effects of the present invention are not reduced. Specific examples thereof include linear carbonates such as dimethyl carbonate (hereinafter abbreviated as "DMC"), diethyl carbonate (hereinafter abbreviated as "DEC"), and methyl ethyl carbonate (hereinafter abbreviated as "MEC"), and cyclic carbonates such as ethylene carbonate (hereinafter abbreviated as "EC"), vinylene carbonate, and fluoroethylene carbonate. In the present invention, two or more of these materials can be used in combination. Among them, preferred are DMC, DEC and MEC, in which the polycarbonate resin has relatively high solubility.

In the present invention, the content of the carbonate-based organic solvent in the resin composition is 50 to 99.95% by mass, preferably 70 to 99% by mass, more preferably 75 to 99% by mass, and particularly preferably 80 to 99% by mass.

In the present invention, it is preferred to use a solvent consisting only of a combination of carbonate-based organic solvents, but when a coating liquid is supposed, an organic solvent that is not a poisonous or deleterious substance defined in the Japanese Poisonous and Deleterious Substances Control Act or a specified chemical substance defined in the Japanese Industrial Safety and Health Act may be added within a range in which the effects of the present invention are not reduced. Specifically, the content of an organic solvent other than the carbonate-based organic solvent in the resin composition of the present invention may be about 0 to 30% by mass.

### <Optional Additives>

When the resin composition of the present invention is applied, pigments, dyes, colored particles, and particles having optical interference properties can be added in order to enhance color effects. Examples of pigments and dyes include organic pigments such as an azo pigment and a phthalocyanine pigment, and specific examples thereof include Red No. 104, Red No. 106, Red No. 201, Red No. 202, Red No. 204, Red No. 215, Red No. 220, Orange No. 203, Orange No. 204, Blue No. 1, Blue No. 404, Yellow No. 205, Yellow No. 401, and Yellow No. 405. Further, it is also possible to use titanium mica, titanium oxide, iron oxide, tin oxide, zirconium oxide, chromium oxide, bismuth oxychloride, silica, chromium, titanium nitride, titanium, magnesium fluoride, gold, silver, nickel, etc. in order to produce white, pearl color, metallic color, or glittery color. The particles having optical interference properties are particles that reflect or scatter light to enhance color effects, and examples thereof include glass beads, tiny shells, and mica. These materials are preferably added to the resin composition in an amount of 0.0001 to 10.0% by mass as desired.

Moreover, a rust inhibitor, an antioxidant, a dispersant, an ultraviolet absorber, a defoamer, a leveling agent or the like may be added according to need.

When the content of the polycarbonate resin in the resin composition is 10% by mass and the content of the propylene carbonate in the resin composition is 90% by mass, the transmittance of the resin composition of the present invention at 440 nm is preferably 90% or more, more preferably 95% or more, and particularly preferably 96% or more.

The transmittance can be measured by the method described in the Examples below.

The viscosity of the resin composition of the present invention can be arbitrarily set depending on the desired application, but when the content of the polycarbonate resin in the resin composition is 10% by mass and the content of the propylene carbonate in the resin composition is 90% by mass, the viscosity is preferably 80 to 170 mPa·s, more preferably 90 to 170 mPa·s, and particularly preferably 100 to 160 mPa·s.

Regarding the method for measuring the viscosity, for example, the viscosity can be measured using a vibration-type viscometer (CJV5000) manufactured by A&D Company, Limited at a measurement temperature of 25°C.

After the resin composition of the present invention is applied and dried, the thickness of the coating film is preferably 1 to 200 µm, more preferably 5 to 120 µm, and particularly preferably 10 to 60 µm. By setting the thickness of the coating film to 1 µm or more, the surface protection strength of the coating film can be ensured, and by setting the thickness to 200 µm or less, peeling due to shrinkage of the coating film can be suppressed, and therefore the ranges are preferred.

### [Electrolytic Solution]

When the resin composition of the present invention is used as an electrolytic solution, a Li salt is preferably added in an amount of 0.1 to 30% by mass. The Li salt is soluble in the carbonate-based organic solvent, and specific examples thereof include LiPF₆, C₂F₆LiNO₄, LiClO₄, LiBF₄, LiCoO₂, LiBOB, LiBH₄, Li(FSO₂)₂N, and Li(CF₃SO₂)₂N. Among them, at least one of LiPF₆ and C₂F₆LiNO₄ is preferably contained in the Li salt. Further, a stabilizer for stabilizing the electrode surface, an overcharge inhibitor, a flame retardant, etc. may be added in small amounts.

### [Polymer Gel Electrolyte]

A polymer gel electrolyte can be obtained by concentrating and partially gelling the electrolytic solution of the present invention. The method for concentrating the electrolytic solution is not particularly limited, and examples thereof include a method in which a solvent is partially removed by air drying to give a highly viscous liquid with a solidified surface.

The polymer gel electrolyte of the present invention has a conductivity at 20°C of preferably 1 to 30,000 µS/cm, more preferably 10 to 20,000 µS/cm, and particularly preferably 100 to 10,000 µS/cm.

The polymer gel electrolyte of the present invention can be suitably used as a material for Li-ion polymer batteries, electric double layer capacitors, electrolytic condensers, etc.

### EXAMPLES

Hereinafter, the present invention will be described in detail by way of working examples and comparative examples, but the present invention is not limited to the working examples.

### (1) Solubility in Propylene Carbonate (10% by mass solution)

1 g of a polycarbonate resin and 9 g of propylene carbonate were put in a 20 ml vial and the mixture was stirred. The outer appearance of the obtained resin composition (resin solution) was visually observed and judged according to the following criteria:
Resin composition (resin solution) which has no undissolved resin and is transparent: "A"
Resin composition (resin solution) having undissolved resin which is observed after allowed to stand: "B"
Resin composition (resin solution) which is cloudy: "C"
Case where resin does not dissolve at all: "D"

### (2) Solubility in Propylene Carbonate (20% by mass solution)

2 g of a polycarbonate resin and 8 g of propylene carbonate were put in a 20 ml vial and the mixture was stirred. The outer appearance of the obtained resin composition (resin solution) was visually observed and judged according to the same criteria as those for the 10% by mass solution described above.

### (3) Viscosity (mPa·S) of 10% by Mass Solution of Propylene Carbonate

The viscosity of the resin composition (resin solution) obtained in (1) above was measured using a vibration-type viscometer.
Measuring device: Vibration-type viscometer CJV5000 manufactured by A&D Company, Limited
Measurement temperature: 25°C

### (4) Transmittance at 440 nm at the Time of Preparation of 10% by Mass Solution of Propylene Carbonate

The transmittance of the resin composition (resin solution) obtained in (1) above was measured using a spectrophotometer.
Measuring device: Ultraviolet-visible spectrophotometer UV-1280 manufactured by Shimadzu Corporation
Cell: 1 cm quartz cell
Measurement wavelength: 400 nm to 850 nm
Measurement procedure:
   1. In spectrum mode, base correction was performed using propylene carbonate.
   2. The transmittance of the resin composition (resin solution) at 400 nm to 850 nm was measured.
   3. The transmittance at 440 nm was extracted.

Note that the "transmittance at 440 nm after allowed to stand for 3 days" is the value obtained by measuring the transmittance in the same manner after the resin composition (resin solution) is prepared and then allowed to stand for 3 days.

### (Example 1)

In 820 ml of 6.8% (w/w) aqueous solution of sodium hydroxide, 25 g (0.12 mol) of dihydroxydiphenylmethane (hereinafter abbreviated as "BPF-SG": manufactured by Gun Ei Chemical Industry Co., Ltd., isomer mixture, Formula (1-1): Formula (1-2): Formula (1-3) = 31.9:49.2:18.5 (% by mass), purity: 99.6% by mass, phenol content: 30 ppm), 60 g (0.26 mol) of 2,2-bis(4-hydroxyphenyl)propane (hereinafter abbreviated as "BPA": manufactured by Mitsubishi Chemical Corporation), and 15 g (0.04 mol) of 2,2-bis(4-hydroxyphenyl)-1,1,1,3,3,3-hexafluoropropane (hereinafter abbreviated as "BPAF": manufactured by Central Glass Co., Ltd.) as raw material monomers (dihydroxy compounds), and 0.5 g of hydrosulfite were dissolved.

300 ml of methylene chloride was added thereto, and while stirring, 59.9 g of phosgene was then injected therein over 40 minutes while maintaining the temperature at 15 to 25°C.

After the injection of phosgene was completed, 2.50 g of p-t-butylphenol (hereinafter abbreviated as "PTBP"; manufactured by Dainippon Ink and Chemicals, Inc.) as a molecular weight control agent was added thereto, and the mixture was vigorously stirred to emulsify the reaction solution. After emulsification, 0.5 ml of triethylamine was added thereto, and the mixture was stirred at 20 to 30°C for about 1 hour to perform a polymerization.

After the polymerization was completed, the reaction solution was separated into an aqueous phase and an organic phase, the organic phase was neutralized with phosphoric acid, and washing with water was repeated until the conductivity of the former solution (aqueous phase) became 10 µS/cm or less. The obtained polymer solution was transferred onto an aluminum plate and the solvent was removed by evaporation on a hot plate. The obtained solid was further dried at 120°C for 24 hours to obtain a polymer solid.

The obtained polymer was analyzed by means of infrared absorption spectrum, and absorption by carbonyl groups was confirmed at a position near 1770 cm⁻¹ and absorption by ether bonds was confirmed at a position near 1240 cm⁻¹. It was confirmed that the polymer was a polycarbonate resin having carbonate bonds (hereinafter abbreviated as "PC-1"). Regarding the obtained resin (PC-1), the molecular weight (Mv), solubility in propylene carbonate, viscosity of 10% by mass solution of propylene carbonate, and transmittance are shown in Table 1.

### (Examples 2 to 4, Comparative Examples 1 to 4)

A polycarbonate resin was obtained in a manner similar to that in Example 1, except that the raw material monomers (dihydroxy compounds) and the molar ratio (mol%) thereof were changed to those shown in Table 1. Regarding the obtained resin, the molecular weight (Mv), solubility in propylene carbonate, viscosity of 10% by mass solution of propylene carbonate, and transmittance are shown in Table 1.

**Table 1**

| | | Example 1 | Example 2 | Example 3 | Example 4 | Comparative Example 1 | Comparative Example 2 | Comparative Example 3 | Comparative Example 4 |
|---|---|---|---|---|---|---|---|---|---|
| | | PC-1 | PC-2 | PC-3 | PC-4 | PC-5 | PC-6 | PC-7 | PC-8 |
| Monomer type (mol%) | Structural unit (A) BPF-SG | 29 | 24 | 23 | 50 | 11 | 50 | 30 | 0 |
| | Structural unit (B) BP AF | 10 | 14 | 10 | 10 | 10 | 0 | 0 | 40 |
| | Structural unit (C) BPA | 61 | 62 | 67 | 40 | 79 | 50 | 70 | 60 |
| Terminal structure | | PTBP | PTBP | PTBP | PTBP | PTBP | PTBP | PTBP | PTBP |
| Molecular weight | Mv (×10000) | 1.8 | 1.9 | 2.0 | 1.7 | 2.1 | 2.4 | 2.8 | 0.7 |
| Solubility in propylene carbonate | 10% by mass solution | A | A | B | A | C | A | C | A |
| | 20% by mass solution | A | A | C | A | D | D | D | D |
| Viscosity (mPa·S) of 10% by mass solution of propylene carbonate | | 153 | 116 | 151 | 81 | 21 | 88 | 174 | 37 |
| Transmittance at 440 nm at the time of preparation of 10% by mass solution of propylene carbonate | | 96.6 (99.1) | 98.8 | 97.3 | 97.3 | -3.6 | 93.6 (50.4) | 49.9 | 91.9 (39.6) |
| Transmittance at 440 nm after allowed to stand for 3 days in ( ) | | | | | | | | | |

## Claims

1. A polycarbonate resin that comprises a structural unit (A) derived from a monomer represented by general formula (1), a structural unit (B) derived from a monomer represented by general formula (2), and a structural unit (C) derived from a monomer represented by general formula (3),
wherein relative to a total amount of the structural units (A), (B) and (C) that constitute the polycarbonate resin, a ratio of the structural unit (A) is 20 to 50 mol%, a ratio of the structural unit (B) is 5 to 20 mol%, and a ratio of the structural unit (C) is 30 to 75 mol%: 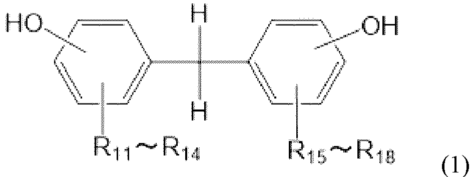 wherein in general formula (1),
R₁₁ to R₁₄ and R₁₅ to R₁₈ each independently represent hydrogen, fluorine, chlorine, bromine, or iodine, or an alkyl group having 1 to 20 carbon atoms, an aryl group having 6 to 12 carbon atoms, an alkenyl group having 2 to 12 carbon atoms, an alkoxy group having 1 to 5 carbon atoms, or an aralkyl group having 7 to 17 carbon atoms, each of which may have a substituent, 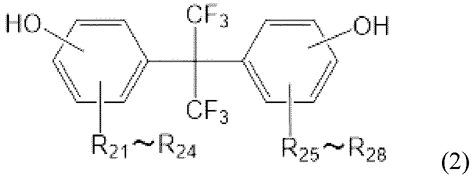 wherein in general formula (2),
R₂₁ to R₂₄ and R₂₅ to R₂₈ each independently represent hydrogen, fluorine, chlorine, bromine, or iodine, or an alkyl group having 1 to 20 carbon atoms, an aryl group having 6 to 12 carbon atoms, an alkenyl group having 2 to 12 carbon atoms, an alkoxy group having 1 to 5 carbon atoms, or an aralkyl group having 7 to 17 carbon atoms, each of which may have a substituent, 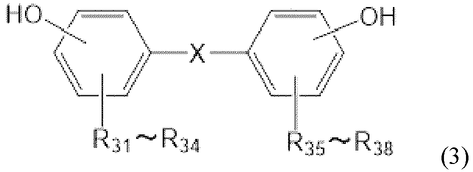 wherein in general formula (3),
R₃₁ to R₃₄ and R₃₅ to R₃₈ each independently represent hydrogen, fluorine, chlorine, bromine, or iodine, or an alkyl group having 1 to 20 carbon atoms, an aryl group having 6 to 12 carbon atoms, an alkenyl group having 2 to 12 carbon atoms, an alkoxy group having 1 to 5 carbon atoms, or an aralkyl group having 7 to 17 carbon atoms, each of which may have a substituent; and
Xis 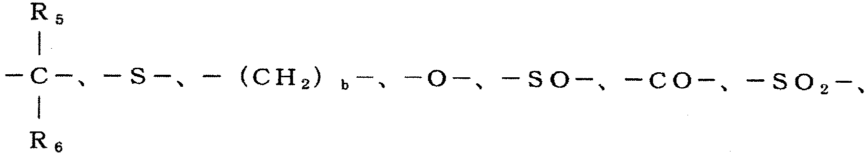 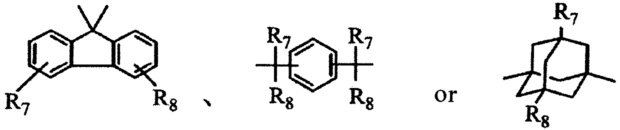 wherein in formulae,
R₅ and R₆ each independently represent hydrogen, fluorine, chlorine, bromine, or iodine, or an alkyl group having 1 to 20 carbon atoms, an alkoxy group having 1 to 5 carbon atoms, or an aryl group having 6 to 12 carbon atoms, each of which may have a substituent, or represent a group in which R₅ and R₆ bind to each other to form a carbocyclic ring having 5 to 20 carbon atoms or a heterocyclic ring having 5 to 12 elements, with the proviso that R₅ and R₆ are not both hydrogen or a trifluoromethyl group; and
R₇ and R₅ each independently represent hydrogen, fluorine, chlorine, bromine, or iodine, or an alkyl group having 1 to 9 carbon atoms, an alkoxy group having 1 to 5 carbon atoms, an alkenyl group having 2 to 12 carbon atoms, or an aryl group having 6 to 12 carbon atoms, each of which may have a substituent.

2. The polycarbonate resin according to claim 1, wherein relative to the total amount of the structural units (A), (B) and (C) that constitute the polycarbonate resin, the ratio of the structural unit (A) is 20 to 30 mol%, the ratio of the structural unit (B) is 10 to 15 mol%, and the ratio of the structural unit (C) is 61 to 70 mol%.

3. The polycarbonate resin according to claim 1 or 2, wherein the monomer represented by general formula (1) is a mixture of formula (1-1), formula (1-2) and formula (1-3); the monomer represented by general formula (2) is 2,2-bis(4-hydroxyphenyl)hexafluoropropane (BPAF); and the monomer represented by general formula (3) is 2,2-bis(4-hydroxyphenyl)propane (BPA):

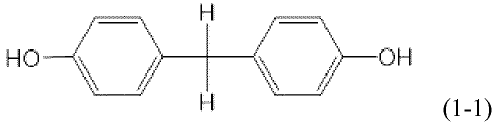

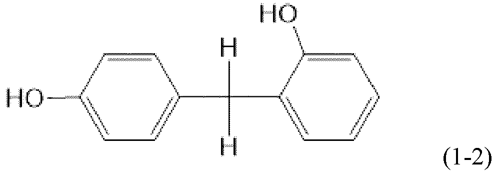

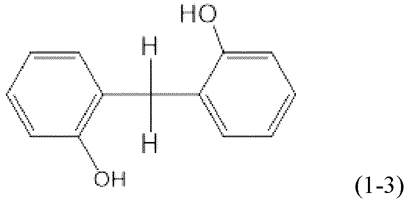

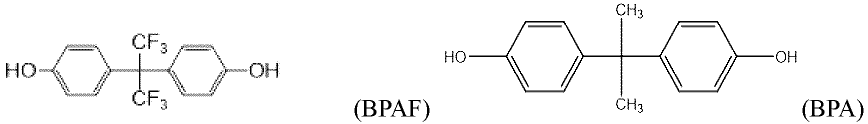

4. A resin composition comprising the polycarbonate resin according to any one of claims 1 to 3 and a carbonate-based organic solvent, wherein
a content of the polycarbonate resin in the resin composition is 0.05 to 50% by mass; and
a content of the carbonate-based organic solvent in the resin composition is 50 to 99.5% by mass.

5. The resin composition according to claim 4, wherein the carbonate-based organic solvent comprises propylene carbonate.

6. The resin composition according to claim 5, wherein when
the content of the polycarbonate resin in the resin composition is 10% by mass and
the content of the propylene carbonate in the resin composition is 90% by mass,
a transmittance of the resin composition at 440 nm is 90% or more.

7. The resin composition according to claim 5 or 6, wherein when
the content of the polycarbonate resin in the resin composition is 10% by mass and
the content of the propylene carbonate in the resin composition is 90% by mass,
a viscosity of the resin composition is 80 to 170 mPa·S.

8. A coating film obtained by drying the resin composition according to any one of claims 4 to 7.

9. An electrolytic solution in which 0.1 to 30% by mass of a lithium salt is dissolved in the resin composition according to any one of claims 4 to 7.

10. The electrolytic solution according to claim 9, wherein the lithium salt comprises at least one of LiPF₆ and C₂F₆LiNO₄.

11. A polymer gel electrolyte obtained by gelling the electrolytic solution according to claim 9 or 10.

12. The polymer gel electrolyte according to claim 11, which has a conductivity of 1 to 30,000 µS/cm.
